# EUROPEAN PATENT APPLICATION

(11) **EP 3 816 773 A1**
(43) Date of publication of application: **05.05.2021**
(21) Application number: 19826914.4
(22) Date of filing: 26.04.2019
(51) Int. Cl.: G06F 3/01

(54) **SPLIT-TYPE HEAD-MOUNTED DISPLAY SYSTEM AND INTERACTION METHOD**

(30) Priority: 26.06.2018 CN 201810673525
(71) Applicant: Zhu, Guang, Shenzhen, Guangdong 518000 (CN)
(72) Inventor: Zhu, Guang, Shenzhen, Guangdong 518000 (CN)
(74) Representative: Westphal, Mussgnug Patentanwälte & Partner mbB
(86) International application number: PCT/CN2019/084552
(87) International publication number: WO 2020/001151

(57) **Abstract**

The present invention relates to a split-type head-mounted display system and an interaction method. The split-type head-mounted display system of the present invention comprises a host and at least one head-mounted display that are separately provided. The host comprises an information collection unit, a memory, a CPU and a first communication unit. The head-mounted display comprises a second communication unit for establishing a communication connection with the first communication unit, and a real-time positioning unit and an image output unit that are connected to the second communication unit. The information collection unit is configured to acquire information of a target image source and send the same to the memory. The real-time positioning unit is configured to acquire position information of the head-mounted display and send the same to the memory by means of the second communication unit and the first communication unit. The CPU receives the information of the target image source and the position information of the head-mounted display, and sends first image information corresponding to the head-mounted display to the image output unit. The present invention can be implemented to realize one host serving multiple head-mounted displays, reducing costs for the use and interaction among multiple users.

## Description

### BACKGROUND OF THE INVENTION

### 1. Technical Field

The invention relates to the AR field, and particularly relates to a split-type head-mounted display system and an interaction method.

### 2. Description of Related Art

An existing head-mounted display is typically a complete set of independent electronic system, that is to say, each set of display outputs images after internal transmission and calculation carried out by a processing unit and multiple sensors. In the case of more than one user, such a single independent electronic system cannot realize demonstration and interaction with other users, and the collaboration between multiple electronic systems is necessary for traditional wearable head-mounted displays.

### BRIEF SUMMARY OF THE INVENTION

The technical issue to be settled by the invention is to overcome the aforementioned detects of the prior art by providing a split-type head-mounted display system and an interaction method.

The technical solution adopted by the invention to settle the aforesaid technical issue is as follows: a split-type head-mounted display system is provided and comprises a host and at least one head-mounted display that are arranged separately;
The host comprises an information acquisition unit, a memory, a CPU and a first communication unit; the head-mounted display comprises a second communication unit to be in communication connection with the first communication unit, and a real-time location unit and an image output unit that are connected to the second communication unit;

The information acquisition unit is used for acquiring target image source information and sending the target image source information to the memory.

The real-time location unit is used for acquiring location information of the head-mounted display and sending the location information to the memory through the second communication unit and the first communication unit.

The CPU receives the target image source information and the location information of the head-mounted display from the memory, sends first image information corresponding to the head-mounted display to the memory, and sends the first image information to the image output unit through the first communication unit and the second communication unit.

Preferably, the at least one head-mounted display includes a master head-mounted display. The master head-mounted display comprises an instruction input unit connected to the second communication unit and used for receiving a user input instruction from the master head-mounted display, and the CPU receives the user input instruction and sends second image information corresponding to the user input instruction to all the head-mounted displays.

Preferably, the instruction input unit (24) comprises a gesture acquisition unit (25) and a gaze input unit, wherein the gesture acquisition unit is used for receiving a user gesture from the head-mounted display (20) to input a corresponding command, and the gaze input unit is used for receiving a gaze direction of user eyes from the head-mounted display (20).

Preferably, the gesture acquisition unit (25) is also used for acquiring a first user gesture corresponding to the head-mounted display, and the CPU acquires the first user gesture and sets the head-mounted display as the master head-mounted display.

The CPU comprises a controller that is connected to and controls the information acquisition unit, the memory and the first communication unit, and an arithmetic unit in data connection with the memory.

Preferably, the information acquisition unit comprises a depth-of-field camera.

Preferably, the head-mounted display further comprises an audio output unit connected to the second communication unit.

The invention further provides an interaction method of a split-type head-mounted display system, comprising:
Acquiring target image source information by a host, and acquiring location information of a head-mounted display by the head-mounted display; and
Sending, by the host, first image information corresponding to the head-mounted display to the head-mounted display according to the target image source information and the location information of the head-mounted display.

Preferably, the head-mounted display system comprises multiple head-mounted displays, and the method further comprises:
Setting one head-mounted display as a master head-mounted display by the host, receiving a user input instruction from the master head-mounted display, and sending second image information corresponding to the user input instruction to all the head-mounted displays.

Preferably, setting one head-mounted display as a master head-mounted display by the host comprises:
Receiving, by the head-mounted display, a first user gesture corresponding to the head-mounted display and sending the first user gesture to the host, and targeting, by the host, the head-mounted display as the master head-mounted display according to the first user gesture; or,
Sequentially targeting, by the host, the head-mounted displays as the master head-mounted display in a set order.

Preferably, the method further comprises: receiving, by the master head-mounted display, a second user gesture corresponding to the master head-mounted display and sending the second user gesture to the host, and releasing the master head-mounted display by the host.

The split-type head-mounted display system and the interaction method of the invention have the following beneficial effects: one host can serve multiple head-mounted displays, so that the multi-user interaction cost is reduced.

### BRIEF DESCRIPTION OF THE SEVERAL VIEWS OF THE DRAWINGS

The invention will be further explained below in conjunction with accompanying drawings and embodiments, in which:
FIG. 1 is a circuit block diagram of a host of a split-type head-mounted display system in Embodiment 1 of the invention;
FIG. 2 is a circuit block diagram of a head-mounted display of the split-type head-mounted display system in Embodiment 1 of the invention; and
FIG. 3 is a circuit block diagram of a host of the split-type head-mounted display system in Embodiment 2 of the invention.

### DETAILED DESCRIPTION OF THE INVENTION

To gain a better understanding of the technical features, purposes and effects of the invention, specific implementations of the invention will be expounded below with reference to the accompanying drawings.

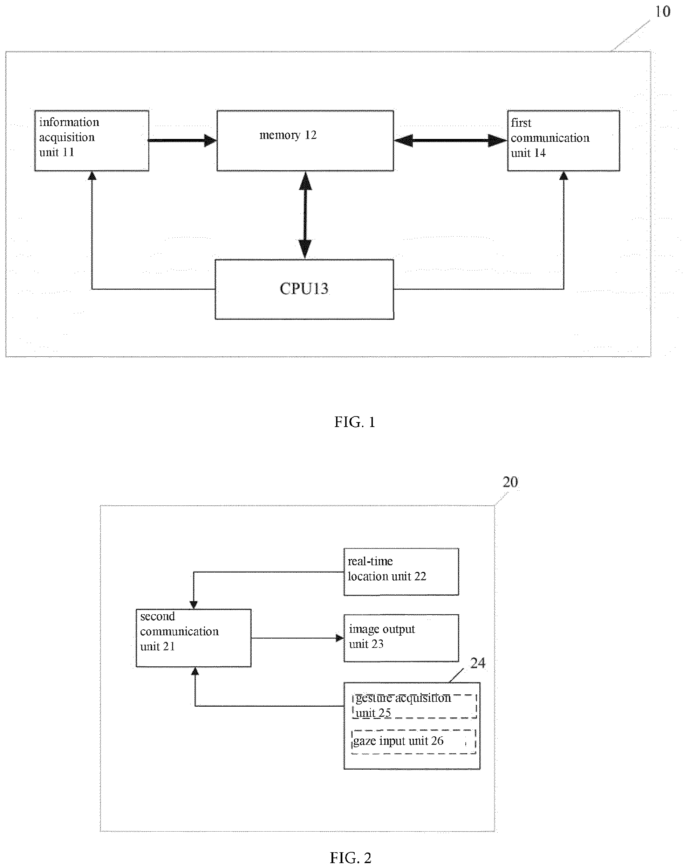

A split-type head-mounted display 20 system comprises a host 10 and at least one head-mounted display 20 that are arranged separately. As shown in FIG. 1, the host 10 comprises an information acquisition unit 11, a memory 12, a CPU 13 and a first communication unit 14. As shown in FIG. 2, the head-mounted display 20 comprises a second communication unit 21 in communication connection with the first communication unit 14, and a real-time location unit 22 and an image output unit 23 that are connected to the second communication unit 21. The information acquisition unit 11 is used for acquiring target image source information and sending the target image source information to the memory 12. The real-time location unit 22 is used for acquiring location information of the head-mounted display 20 and sending the location information to the memory 12 through the second communication unit 21 and the first communication unit 14. The CPU 13 receives the target image source information and the location information of the head-mounted display 20 from the memory 20, sends first image information corresponding to the head-mounted display 20 to the memory 12, and sends the first image information to the image output unit 23 through the first communication unit 14 and the second communication unit 21. Specifically, the host 10 measures and constructs an ambient environment through the information acquisition unit 11. Information such as space shape is acquired by calculation, and the information such as the space shape can be construed as the target image source information. The head-mounted display 20 displays an image with reference to the target image source information. The host 10 stores the target image source information in the memory 12. After a space is constructed, the host 10 establishes communication connection with the head-mounted display 20 through the first communication unit 14, wherein the communication connection may be a wireless communication connection. That is, one host 10 may establish wireless communication connection with one or more head-mounted displays 20 through the first communication unit 14, and the wireless communication connection includes, but is not limited to, WIFI and Bluetooth. It should be noted that the process of space construction, namely acquisition of the target image source information, and the process of establishing communication connection between the host 10 and the head-mounted display 20 can be adjusted as required. For example, the host 10 may acquire the target image source information after establishing communication connection.

The head-mounted display 20 acquires the location information of the head-mounted display 20 through the real-time location unit 22 and sends the location information to the memory 12 through an established communication connection link. After acquiring the target image source information and the location information of the head-mounted display 20 from the memory 12, the CPU 13 makes an judgment based on the location information of the head-mounted display 20, sends first image information corresponding to the head-mounted display 20 to the memory 12, and sends the first image information to the image output unit 23 of the head-mounted display 20 through a communication link. In this way, the head-mounted display 20 can display a final image. It can be understood that the image displayed by the head-mounted display 20 is associated with the real-time location of the head-mounted display 20. For example, if a desk is used as the target image source information, different first images will be displayed based on the desk when the head-mounted display 20 is located in different directions of the desk. It can also be understood that in case of multiple head-mounted displays 20, first images displayed based on the desk are also different when the head-mounted displays 20 are located in different directions of the desk.

Furthermore, the at least one head-mounted display 20 includes a master head-mounted display 20. The master head-mounted display 20 comprises an instruction input unit 24 connected to the second communication unit 21 and used for receiving a user input instruction from the master head-mounted display 20, and the CPU 13 receives the user input instruction and sends second image information corresponding to the user input instruction to all the head-mounted displays 20. Specifically, the host 10 will set one master head-mounted display 20. Regarding the process of setting the master head-mounted display 20, the host 10 may set the head-mounted display 20 as the master head-mounted display 20 when establishing communication connection with the head-mounted display 20, or may set one head-mounted display 20 as the master head-mounted display 20 according to a specific condition after establishing communication connection with all the head-mounted displays 20. The instruction input unit 24 is configured in the master head-mounted display 20 and is used for inputting auser instruction. The host 10 receives the user instruction, modifies the first image information, and generates second image information corresponding to the user input instruction. In addition, only one master head-mounted display 20 establishes communication connection with the same host 10 at the same moment. That is to say, all the head-mounted displays 20 in communication connection with the host 10 may comprise the instruction input unit 24, but only the instruction input unit 24 of the head-mounted display, set as the master head-mounted display 20, can receive the user input instruction to enable the host 10 to perform corresponding operations. It can also be understood that the second image information is also associated with each head-mounted display 20, that is, after the master head-mounted display 20 modifies the first image information, the host 10 will still generate second image information corresponding to the head-mounted display 20 according to the location information of each head-mounted display 20. The user input instruction may also be input by means of a virtual keyboard.

Furthermore, the instruction input unit 24 comprises a gesture acquisition unit 25 and a gaze input unit 26, wherein the gesture acquisition unit 25 is used for receiving a user gesture from the head-mounted display to input a corresponding command, and the gaze input unit 26 is used for receiving the gaze direction of user eyes from the head-mounted display. Specifically, a gesture input request from the user is captured and received by the gesture acquisition unit 25 and is then wirelessly transmitted to the host, and after it is confirmed that an input state is enabled, the gesture acquisition unit 25 will track an action and a trajectory of one hand or both hands of the user to realize the instruction input. For example, a virtual chess game is displayed on a real desk, and after an input is confirmed, the user can pick up a virtual chess piece on a chessboard and places it to a specific position. Gesture acquisition has the obvious advantages that no special learning is needed and any users can do a series of actions such as picking or placing with both hands. However, it also has the defect that accurate operations cannot be performed due to the existence of tracking errors. Taking the chess game as an example, if there are many chess pieces around a target chess piece, it will not be so easy to pick up the target chess piece. In this case, it is necessary to make gaze input involved for the gesture acquisition. The gaze input unit 26 tracks the gaze direction of the eyes of the user in real time through a sensor, similar to the cursor of a mouse, and can fulfill an extremely accurate effect in cooperation with gesture acquisition. Also taking the chess game as an example, in case where the target chess piece cannot be rapidly and accurately picked up merely by means of gesture tracking due to the target chess shielded by multiple surrounding chess pieces, the focal position (target chess piece) will be analyzed with the aid of a gaze input, and the target piece can therefore be picked up easily by considering the gesture in combination with the gaze input. Although it is impossible to reduce errors to zero, compared with single gesture acquisition, using these two inputs will reach extremely high accuracy. Except that a touch sense of the target object cannot be brought to the user, all simple operations can be performed, such as playing a chess game, kneading a clay figurine, or tapping a virtual keyboard to input characters. In addition, in some head-mounted displays with a voice assistant, the instruction input unit may also comprise an audio input unit used for sending voice instructions to the voice assistant. By adoption of the audio input unit, input steps can be simplified, and the performance and experience can be improved.

Furthermore, the gesture acquisition unit 25 of the head-mounted display 20 that is connected to the second communication unit 21 is also used for acquiring a first user gesture corresponding to the head-mounted display 20, and the CPU 13 acquires the first user gesture and sets the head-mounted display 20 as a master head-mounted display 20. Specifically, in some embodiments, each head-mounted display 20 may be provided with a camera or a sensor to recognize a specific gesture (that is, user gestures are acquired by the gesture acquisition unit 25), and by recognizing the specific gesture, the host 10 can set the head-mounted display 20 acquiring the specific gesture as the master head-mounted display 20. It can be understood that all the head-mounted displays 20 will detect whether or not respective gesture acquisition units 25 acquire the specific gesture; when one gesture acquisition unit 25 acquires the specific gesture, the gesture acquisition unit 25 transmits the specific gesture to the host 10, the host 10 will send prompt information to the head-mounted display 20 corresponding to this gesture acquisition unit 25, and the user can confirm the prompt information through the head-mounted display 20. For example, whether or not an input state needs to be enabled is confirmed; if the user confirms that the input state needs to be enabled, this head-mounted display 20 will be set as the master head-mounted display 20 and is able to input user instructions to the host 10. At this moment, the other head-mounted displays 20 are in an observation state and unable to provide an input interface. Of course, it can be understood that when multiple gesture acquisition units 25 all acquire the specific gesture, the host 10 will send the prompt information only to the head-mounted display 20 that first acquires the specific gesture. After the prompt information is confirmed, this head-mounted display 20 will be set as the master head-mounted display 20. The user can actively confirm the prompt information, for example, by clicking the prompt information on an interface.

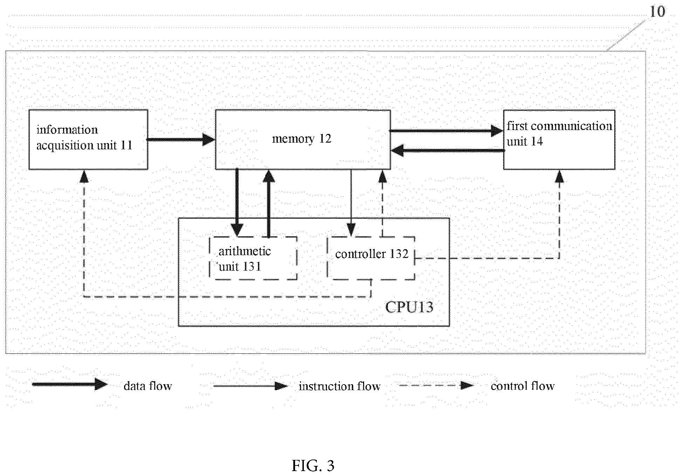

In the embodiment illustrated by FIG. 3, the CPU 13 comprises a controller 132 that is connected to and controls the information acquisition unit 11, the memory 12 and the first communication unit 14, and an arithmetic unit 131 in data connection with the memory 12.

Specifically, when the host 10 creates the target image source information, the information acquisition unit 11, the memory 12 and the first communication unit 14 are controlled by the controller 132 in the CPU 13 to transmit various information to the arithmetic unit 131 of the CPU 13 according to a link provided by a control signal, and the arithmetic unit 131 processes the information and then sends the processed information to the memory 12. The controller 132 controls the processed information to be transmitted along a required link, for example, the processed information is transmitted to the first communication unit 14 and is then transmitted to the head-mounted display 20.

Furthermore, the information acquisition unit 11 comprises a depth-of-field camera. Specifically, the depth-of-field camera acquires an external environment associated with the location of the host 10 or the head-mounted display 20 for the head-mounted display 20 to create required target image source information.

Furthermore, the head-mounted display 20 further comprises an audio output unit connected to the second communication unit 21. Specifically, during use of the head-mounted display 20, special sounds need to be provided to match images in many occasions, and in this case, the host 10 can send an audio file corresponding to the first images through the audio output unit, such as a speaker or an audio unit that can be connected to external earphones, making the user experience of the whole head-mounted display 20 even better.

In addition, the invention provides an interaction method of a split-type head-mounted display 20 system, as follows.

A host 10 acquires target image source information, and a head-mounted display 20 acquires its location information.

The host 10 sends first image information corresponding to the head-mounted display 20 to the head-mounted display 20 according to the target image source information and the location information of the head-mounted display 20.

Specifically, the host 10 acquires an ambient environment and acquires information such as space shape by calculation, the information such as the space shape can be construed as the target image source information, and head-mounted display 20 displays an image with reference to the target image source information. The host 10 establishes communication connection with the head-mounted display 20, and the communication connection may be wireless communication connection, that is, one host 10 may establish wireless communication connection with one or more head-mounted displays 20, and the wireless communication connection includes, but is not limited to, WIFI and Bluetooth. It should be noted that the process of space construction, namely acquisition of the target image source information, and the process of establishing communication connection between the host 10 and the head-mounted display 20 can be adjusted as required. For example, the host 10 may acquire the target image source information after establishing communication connection.

The head-mounted display 20 acquires its location information and sends the location information to the host 10 through an established communication connection link. After acquiring the target image source information and the location information of the head-mounted display 20, the host 10 makes a judgment based on the location information of the head-mounted display 20 and sends first image information corresponding to the head-mounted display 20 to the head-mounted display 20 through a communication link for image display. In this way, the head-mounted display 20 can display a final image. It can be understood that the image displayed by the head-mounted display 20 is associated with the real-time location of the head-mounted display 20. For example, if a desk is used as the target image source information, different first images will be displayed based on the desk when the head-mounted display 20 is located in different directions of the desk. It can also be understood that in case of multiple head-mounted displays 20, first images displayed based on the desk are also different when the head-mounted displays 20 are located in different directions of the desk.

Furthermore, in case of multiple head-mounted displays 20, the method further comprises: The host 10 sets one head-mounted display 20 as a master head-mounted display 20, receives a user input instruction from the master head-mounted display 20, and sends second image information corresponding to the user input instruction to all the head-mounted displays 20. Specifically, the master head-mounted display 20 can receive a user instruction input by a user, and the host 10 receives the user instruction, modifies the first image information, and generates second image information corresponding to the user input instruction. To avoid any conflict, the same host 10 establishes communication connection with only one master head-mounted display 20 at the same moment. That is to say, all the head-mounted displays 20 in communication connection with the host 10 may comprise the instruction input unit 24, but only the one that is set as the master head-mounted unit 20 can receive the instruction input by the user to enable the host 10 to perform corresponding operations. It can also be understood that the second image information is also associated with each head-mounted display 20, that is, after the master head-mounted display 20 modifies the first image information, the host 10 will still generate second image information corresponding to the head-mounted display 20 according to location information of each head-mounted display 20. The user input instruction may be input through a virtual keyboard.

Furthermore, in some embodiments, the host 10 sets one head-mounted display 20 as the master head-mounted display 20 as follows: the head-mounted display 20 receives a first user gesture corresponding to the head-mounted display 20 and sends the first user gesture to the host 10, and the host 10 targets the head-mounted display 20 as the master head-mounted display 20 according to the first user gesture. Specifically, each head-mounted display 20 may be provided with a camera or a sensor to recognize a specific gesture, and by recognizing the specific gesture, the host 10 can set the head-mounted display 20 acquiring the specific gesture as the master head-mounted display 20. All the head-mounted displays 20 will detect whether or not respective gesture acquisition units 25 acquire the specific gesture; when one gesture acquisition unit 25 acquires the specific gesture, the gesture acquisition unit 25 transmits the specific gesture to the host 10, the host 10 will send prompt information to the head-mounted display 20 corresponding to this gesture acquisition unit 25, and the user can confirm the prompt information through the head-mounted display 20. For example, whether or not an input state needs to be enabled is confirmed; if the user confirms that the input state needs to be enabled, this head-mounted display 20 will be set as the master head-mounted display 20 and is able to input user instructions to the host 10. At this moment, the other head-mounted displays 20 are in an observation state and unable to provide an input interface. Of course, it can be understood that when the specific gesture is input to multiple gesture acquisition units 25, the host 10 will send the prompt information only to the head-mounted display 20 that first acquires the specific gesture. After the prompt information is confirmed, this head-mounted display 20 will be set as the master head-mounted display 20. The user can actively confirm the prompt information, for example, by clicking the prompt information on an interface.

In some embodiments, the host 10 sets one head-mounted display 20 as the master head-mounted display 20 as follows: the host 10 sequentially targets the head-mounted displays 20 as the master head-mounted display 20 in a set order. Specifically, the host 10 may alternately set all the head-mounted displays 20 to an input state in a specific order.

The method further comprises: the master head-mounted display 20 receives a second user gesture corresponding to the master head-mounted display 20 and sends the second user gesture to the host 10, and the host 10 releases the master head-mounted display 20. The user in the input state needs to send out a second specific gesture for termination after operation, and the host 10 will confirm and quit from the input state to enter into the original detection input state. The second user gesture may include a release input in an input interface of the master head-mounted display, and the master head-mounted display can be released by clicking and confirmation through the cooperation of the release input and a gaze focal. After the master head-mounted display is released, the host will start to search for first user gestures.

To protect the user against interference from other external factors during input, the master head-mounted display is unique at the same moment. When completing the input, the user needs to release the input permission to quit from the current state. Only when the current master head-mounted display quits, the system will automatically detect a next input request according to software running requirements. At the same time, the host will automatically change the master head-mounted display in a certain order according to the requirements of the software. After the current master head-mounted display quits, the next head-mounted display in the order will be set as the master head-mounted display automatically without detection. The master head-mounted display is unique at the same moment, but is not indispensable. The host will automatically determine whether or not an input is needed at present according to the software running requirements. If an input is not needed, the master head-mounted display does not need to be set. For example, when two users play a chess game, the user with the master head-mounted display needs to open the chess software at first, and the two users will exchange the input permission alternately in the subsequent playing process; at the end of the chess game (the winner and the loser have been distinguished), the system will automatically play some animations such as returning the chess pieces, and in the process, no input is needed, that is, the host does not need to set the master head-mounted display.

It can be understood that the above embodiments that are specifically described in detail are merely used to illustrate preferred implementations of the invention, and should not be construed as limitations of the patent scope of the invention. It should be noted that those ordinarily skilled in the art can combine the aforesaid technical features freely and can make different transformations and improvements without departing from the concept of the invention, and all these combinations, transformations and improvements also fall within the protection scope of the invention. Thus, all equivalent transformations and embellishments made within the scope of the claims of the invention should also under the coverage of the claims of the invention.

## Claims

1. A split-type head-mounted display system, **characterized by** comprising a host (10) and at least one head-mounted display (20) that are arranged separately, wherein:
the host (10) comprises an information acquisition unit (11), a memory (12), a CPU (13) and a first communication unit (14); the head-mounted display (20) comprises a second communication unit (21) configured to be in communication connection with the first communication unit (14), and a real-time location unit (22) and an image output unit (23) that are connected to the second communication unit (21);
the information acquisition unit (11) is configured for acquiring target image source information and sending the target image source information to the memory (12);
the real-time location unit (22) is configured for acquiring location information of the head-mounted display (20) and sending the location information to the memory (12) through the second communication unit (21) and the first communication unit (14);
the CPU (13) is configured to receive the target image source information and the location information of the head-mounted display (20) from the memory (12), send first image information corresponding to the head-mounted display (20) to the memory (12), and send the first image information to the image output unit (23) through the first communication unit (14) and the second communication unit (21).

2. The split-type head-mounted display system according to Claim 1, **characterized in that** the at least one head-mounted display (20) includes a master head-mounted display (20);
the master head-mounted display (20) comprises an instruction input unit (24) connected to the second communication unit (21) and configured for receiving a user input instruction from the master head-mounted display, and the CPU (13) is configured to receive the user input instruction and send second image information corresponding to the user input instruction to all the head-mounted displays (20).

3. The split-type head-mounted display system according to Claim 2, **characterized in that** the instruction input unit (24) comprises a gesture acquisition unit (25) and a gaze input unit (26), the gesture acquisition unit (25) is configured for receiving a user gesture from the head-mounted display (20) to input a corresponding command, and the gaze input unit (26) is configured for receiving a gaze direction of user eyes from the head-mounted display (20).

4. The split-type head-mounted display system according to Claim 3, **characterized in that** the gesture acquisition unit (25) is also configured for acquiring a preset user gesture corresponding to the head-mounted display, and the CPU (13) is configured to acquire the preset user gesture and set the head-mounted display (20) as the master head-mounted display.

5. The split-type head-mounted display system according to Claim 1, **characterized in that** the CPU (13) comprises a controller (132) that is connected to and controls the information acquisition unit (11), the memory (12) and the first communication unit (14), and an arithmetic unit (131) in data connection with the memory (12).

6. The split-type head-mounted display system according to Claim 1, **characterized in that** the information acquisition unit (11) comprises a depth-of-field camera; and/or
the head-mounted display (20) further comprises an audio output unit connected to the second communication unit (21).

7. An interaction method of a split-type head-mounted display system, **characterized by**, comprising:
acquiring target image source information by a host (10), and acquiring location information of a head-mounted display (20) by the head-mounted display (20); and
sending by the host (10), first image information corresponding to the head-mounted display (20) to the head-mounted display (20) according to the target image source information and the location information of the head-mounted display (20).

8. The interaction method of a split-type head-mounted display system according to Claim 7, **characterized in that** the head-mounted display system comprises multiple head-mounted displays (20), and the method further comprises:
setting one of the multiple head-mounted display (20) as a master head-mounted display by the host (10), receiving a user input instruction from the master head-mounted display, and sending second image information corresponding to the user input instruction to all the head-mounted displays (20).

9. The interaction method of a split-type head-mounted display system according to Claim 8, **characterized in that** setting one of the multiple head-mounted display (20) as a master head-mounted display by the host (10) comprises:
receiving by the head-mounted display (20), a first user gesture corresponding to the head-mounted display (20) and sending the first user gesture to the host (10), and targeting, by the host (10), the head-mounted display (20) as the master head-mounted display according to the first user gesture; or
sequentially targeting by the host (10), the head-mounted displays (20) as the master head-mounted display in a set order.

10. The interaction method of a split-type head-mounted display system according to Claim 9, **characterized by** further comprising: receiving, by the master head-mounted display, a second user gesture corresponding to the master head-mounted display and sending the second user gesture to the host (10), and releasing the master head-mounted display by the host (10).
